(19) Europäisches Patentamt
European Patent Office
Office européen des brevets

(11) **EP 3 480 781 A1**

(12) **EUROPEAN PATENT APPLICATION**

(43) Date of publication:
08.05.2019 Bulletin 2019/19

(51) Int Cl.:
*G06T 3/40* (2006.01)    *G06T 11/20* (2006.01)

(21) Application number: 17199643.2

(22) Date of filing: 02.11.2017

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
**BA ME**
Designated Validation States:
**MA MD**

(72) Inventor: **KAPOOR, Ravi**
**122051 Gurgaon, Haryana (IN)**

(74) Representative: **Isarpatent**
**Patent- und Rechtsanwälte Behnisch Barth Charles**
**Hassa Peckmann & Partner mbB**
**Friedrichstrasse 31**
**80801 München (DE)**

(71) Applicant: **Siemens Aktiengesellschaft**
**80333 München (DE)**

(54) **INTERACTIVE METHOD AND SYSTEM FOR SCALING DATA PLOTS IN DISTRIBUTED CONTROL SYSTEM**

(57)    The present invention provides an interactive method and system for scaling data plots in distributed control systems. The method comprises receiving a request for scaling an original data plot from a client device via a communication network. Further, the method comprises determining a region of interest within the original data plot based on the set of input points. The determined region of interest comprises a first set of parameters. Furthermore, the method comprises computing a second set of parameters associated with the determined region of interest based on the first set of parameters. Also, the method comprises determining plurality of plot data values within the determined region of interest based on the second set of parameters. Additionally, the method comprises generating a scaled data plot comprising the determined plurality of plot data values.

FIG 6b

EP 3 480 781 A1

**Description**

The present invention relates to the field of distributed control systems, and more particularly relates to an interactive method and system for scaling data plots in distributed control systems.

In distributed control systems, condition monitoring is a process of monitoring a parameter of condition in machinery (vibration, temperature etc.), in order to identify a significant change which is indicative of a developing fault. It is a major component of predictive maintenance. The use of condition monitoring allows maintenance to be scheduled, or other actions to be taken to prevent failure and avoid its consequences. Condition monitoring has a unique benefit in that conditions that would shorten normal lifespan can be addressed before they develop into a major failure. Condition monitoring techniques are normally used on rotating equipment and other machinery (pumps, electric motors, internal combustion engines, presses), while periodic inspection using non-destructive testing techniques and fit for service evaluation are used for stationary plant equipment such as steam boilers, piping and heat exchangers. Depending on the type of machine, its typical malfunctions, the bearing types employed, rotational speeds, and other factors, the CM specialist may use additional diagnostic tools, such as examination of the time domain signal, the phase relationship between vibration components and a timing mark on the machine shaft (often known as a keyphasor), historical trends of vibration levels, the shape of vibration, and numerous other aspects of the signal along with other information from the process such as load, bearing temperatures, flow rates, valve positions and pressures to provide an accurate diagnosis. This is particularly true for machines that use fluid bearings rather than rolling-element bearings. To enable them to look at this data in a more simplified form vibration analysts or machinery diagnostic engineers have adopted a number of mathematical plots (data plots or data plots) to show machine problems and running characteristics, these plots include the bode plot, the waterfall plot, the polar plot and the orbit time base plot amongst others.

Existing condition monitoring system outputs the above plots representing overall equipment operation of a plant, together with diagnosis of a range of mechanical, electrical, and operational problems, and specifically showing how these parameters are changing through time. However, such existing system fail to provide flexibility to the plant operator in customizing the data plots as per the requirement of the plant and thus increasing the accuracy level of various parameters being displayed on these data plots. Moreover, the existing system also fails to provide flexibility in customizing the data plots having different dimensions of plant data.

In light of above, there is a need for a method and system for customizing the data plots of a distributed control system as per requirement of the plant and allow flexibility for a plant operator to perform various operations on the data plot in order to achieve more accurate and error free diagnostic results of the plant data.

Therefore it is an object of the present invention to provide a method and system for scaling data plots in distributed control systems.

The object of the present invention is achieved by a method for scaling data plots in a distributed control system. The method comprises receiving a request for scaling an original data plot from a client device via a communication network. The request comprises a set of input data points associated with the original data plot. The original data plot corresponds to an original domain and the original data plot comprises an original origin value, the plurality of plot data values mapped to a plurality of axis coordinates and an original set of plot angles. In an embodiment, a data plot may comprise a polar plot. In an embodiment, a polar plot is drawn in a circular shape with a radius 'r', domain 'd' known as polar domain and origin (0,0). The data values plotted on the polar plot are measured in terms of FloatVectorRts. The data values are plotted across radius 'r' and angle theta in the polar plot. In another embodiment, the data plot may comprise an YT, XY, and FFT plots of distributed control systems. Further, the method comprises determining a region of interest within the original data plot based on the set of input points. The determined region of interest comprises a first set of parameters. The first set of parameters comprises the subset of plot angles and the sub set of plurality of axis coordinates. Further, the method comprises computing a second set of parameters associated with the determined region of interest based on the first set of parameters. The second set of data parameters comprises computed modified domain value, computed scale factor and modified origin value. Further, the method comprises determining plurality of plot data values within the determined region of interest based on the second set of parameters. Additionally, the method comprises generating a scaled data plot comprising the generated plurality of plot data values. The generated scaled data plot corresponds to the determined region of interest. In a preferred embodiment, the scaled data plot is generated in client device specific format and then is transmitted to a client device over a communication network. In an embodiment, the client device specific format may be a pixel value based format. Moreover, the method comprises displaying the scaled data plot on a graphical user interface.

In a preferred embodiment, in determining the region of interest within the original data plot based on the set of input points, the method comprises determining a subset of plot angles among the original set of plot angles based on the set of input data points. Further, the method comprises determining a subset of axis coordinates plotted on the original data plot based on the set of input data points.

In another preferred embodiment, in computing the second set of parameters associated with the determined region of interest based on the first set of parameters, the method comprises computing a modified domain value corresponding to the determined region of interest based on the first set of parameters. Further, the method comprises computing a scale factor for the determined region of interest based on the computed modified domain value. Also, the method comprises determining a modified origin value for the determined region of interest based on the computed scale factor.

The object of the present invention can also be achieved by an apparatus for scaling data plots in a distributed control system. The apparatus comprises a processor and a memory coupled to the processor. The memory comprises an interactive data manipulation module stored in the form of machine-readable instructions executable by the processor.

The interactive data manipulation module is configured for receiving a request for scaling an original data plot from a client device via a communication network. The request comprises a set of input data points associated with the original data plot. The original data plot corresponds to an original domain and the original data plot comprises an original origin value, the plurality of plot data values mapped to a plurality of axis coordinates and an original set of plot angles. The interactive data manipulation module is further configured for determining a region of interest within the original data plot based on the set of input points. The determined region of interest comprises a first set of parameters. The first set of parameters comprises the subset of plot angles and the sub set of plurality of axis coordinates. The interactive data manipulation module is further configured for computing a second set of parameters associated with the determined region of interest based on the first set of parameters. The second set of data parameters comprises computed modified domain value, computed scale factor and modified origin value. Also, the interactive data manipulation module is configured for determining plurality of plot data values within the determined region of interest based on the second set of parameters. Additionally, the interactive data manipulation module is configured for generating a scaled data plot comprising the generated plurality of plot data values. The generated scaled data plot corresponds to the determined region of interest. In an embodiment, the scaled data plot is generated in client device specific format and then is transmitted to a client device over a communication network. In an embodiment, the client device specific format may be a pixel value based format. The interactive data manipulation module is also configured for displaying the scaled data plot on a graphical user interface.

In a preferred embodiment, in determining the region of interest within the original data plot based on the set of input points, the interactive data manipulation module is configured for determining a subset of plot angles among the original set of plot angles based on the set of input data points. Further, the interactive data manipulation module is configured for determining a subset of axis coordinates plotted on the original data plot based on the set of input data points.

In another preferred embodiment, in computing the second set of parameters associated with the determined region of interest based on the first set of parameters, the interactive data manipulation module is configured for computing a modified domain value corresponding to the determined region of interest based on the first set of parameters. Further, the interactive data manipulation module is configured for computing a scale factor for the determined region of interest based on the computed modified domain value. Further, the interactive data manipulation module is configured for determining a modified origin value for the determined region of interest based on the computed scale factor.

The object of the present invention can also be achieved by a distributed control system comprising a server configured for performing the method steps described above and one or more client devices configured for outputting the scaled data plot on a graphical user interface. The one or more client devices are communicatively coupled to the server via a network.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:

FIG 1         is a block diagram of a distributed control system in which an embodiment can be implemented;

FIG 2         is a block diagram of a server as shown in FIG 1, according to an embodiment of the present invention;

FIG 3         is a block diagram illustrating various modules of an interactive data manipulation module of FIG 1, according to an embodiment of the present invention;

FIG 4         is a flowchart illustrating an exemplary method of scaling data plots in a distributed control system, according to an embodiment of the present invention;

FIG 5         is a process flowchart illustrating an exemplary method of data manipulation of data plots in a distributed control system, according to an embodiment of the present invention;

FIG 6A-6C     are snapshots of data plots at various stages of data manipulation method, according to an exemplary embodiment of the present invention;

FIG 7A-7B      are snapshots of data plots at various stages of data manipulation method, according to another exemplary embodiment of the present invention;

FIG 8A-8B      are snapshots of data plots at various stages of data manipulation method, according to yet another exemplary embodiment of the present invention;

FIG 9A-B      are snapshots of data plots at various stages of data manipulation method, according to yet another exemplary embodiment of the present invention; and

FIG 10A-B      are snapshots of data plots at various stages of data manipulation method, according to yet another exemplary embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

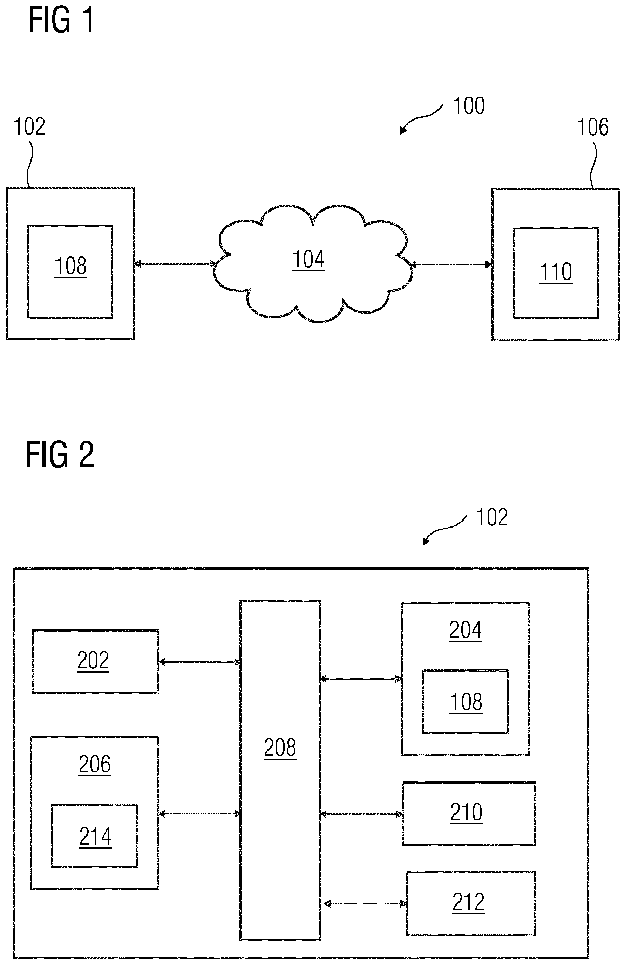

FIG 1 is a block diagram of a distributed control system 100 in which an embodiment can be implemented. The distributed control system 100 comprises a server 102 communicatively connected to a client device 106 via a network 104(wired or wireless network. The server 102 is configured for manipulating the data in the data plots of distributed control system 100. In an embodiment, the server 102 may be a web-server capable of scaling the data plots in a distributed control system. In another embodiment, the server 102 may be implemented as any desired computer system and may form a host system or server, such as a website. The server 102 is also configured for 102 scaling the data plots corresponding to a plant environment.

The server 102 comprises an interactive data manipulation module 108. The interactive data manipulation module 108 is configured for receiving a request for scaling an original data plot from a client device, such as those of 106 via a communication network 104. For example, the original data plot corresponds to an original domain and the original data plot comprises an original origin value, the plurality of plot data values mapped to a plurality of axis coordinates and an original set of plot angles. The request comprises a set of input data points associated with the original data plot. Further, the interactive data manipulation module 108 is configured for determining a region of interest within the original data plot based on the set of input points. The determined region of interest comprises a first set of parameters. For example, the first set of parameters comprises the subset of plot angles and the sub set of plurality of axis coordinates. Also, the interactive data manipulation module 108 is configured for computing a second set of parameters associated with the determined region of interest based on the first set of parameters. For example, the second set of data parameters comprises the computed modified domain value, the computed scale factor and the modified origin value. Furthermore, the interactive data manipulation module 108 is configured for determining plurality of plot data values within the determined region of interest based on the second set of parameters. Additionally, the interactive data manipulation module 108 is configured for generating a scaled data plot comprising the generated plurality of plot data values. The generated scaled data plot corresponds to the determined region of interest. In an embodiment, the scaled data plot is generated in client device specific format and then is transmitted to a client device 106 over a communication network 104. In an embodiment, the client device specific format may be a pixel value based format. Moreover, the interactive data manipulation module 108 is configured for displaying the scaled data plot on a graphical user interface.

The interactive data manipulation module 108 is configured for determining the region of interest within the original data plot based on the set of input points. In an exemplary implementation, the interactive data manipulation module 108 is configured for determining a subset of plot angles among the original set of plot angles based on the set of input data points. Further, the interactive data manipulation module 108 is configured for determining a subset of axis coordinates plotted on the original data plot based on the set of input data points.

Further, the interactive data manipulation module 108 is configured for computing the second set of parameters associated with the determined region of interest based on the first set of parameters. In exemplary implementations, the interactive data manipulation module 108 is configured for computing a modified domain value corresponding to the determined region of interest based on the first set of parameters, computing a scale factor for the determined region of interest based on the computed modified domain value and determining a modified origin value for the determined region of interest based on the computed scale factor.

One skilled in the art could understand that the server 102 may be a dedicated server residing inside a plant or a remote server residing outside the plant. For example, the server 102 may be a component of a distributed control system 100. Also, one skilled in the art could understand that the server 102 may be a component of a cloud infrastructure for providing the functionality described above. Also, one can envision that the interactive data manipulation module 108 can be part of the distributed control system or a cloud infrastructure. The interactive data manipulation module 108 may take a form of software application executed on the distributed control system or hosted on a cloud platform and executed by one or more processors on the cloud platform. Alternatively, the interactive data manipulation module 108 can be embedded software in a control system code.

The client device 106 may be connected or otherwise operably coupled with the network 104 and can be implemented as any desktop computer or terminal, or any desired handheld or portable wireless user device, such as a personal computer, a smartphone, a tablet, a laptop computer, a personal digital assistant, and combinations thereof, for example. The client device 106 may comprise a user interface 110 for visualizing the scaled data plot generated by the server 102. In an embodiment, the user interface 110 may be a web browser or web application running on the client device 106 and is capable of accessing a website and/or communicating information and/or data with a web server such as the server 102 over a network, such as the network 104. Users of the client device 106 can access the server 102 via the user interface 110. For example, the user may send a request to the server 102 to generate a scaled data plot from the client device 106. The user interface 110 may be specifically designed for accessing the interactive data manipulation module 108 in the server 102. In an embodiment, the interactive data manipulation module 108 may be resided in a cloud server in a cloud computing environment, wherein the client device 106 connected via a cloud network may access the interactive data manipulation module 108 to generate the scaled data plots.

FIG 2 is a block diagram of a server 102 of FIG 1, according to an embodiment of the present invention. In FIG 2, the server 102 comprises a processor 202, a memory 204, a storage unit 206, an input unit 210, an output unit 212 and a bus 208.

The processor 202, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 202 may also include embedded controllers, such as generic or programmable logic devices or arrays, application specific integrated circuits, single-chip computers, and the like.

The memory 204 may be volatile memory and non-volatile memory. A variety of computer-readable storage media may be stored in and accessed from the memory 204. The memory 204 may include any suitable elements for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, and the like. As depicted, the memory 204 includes the interactive data manipulation module 108. The interactive data manipulation module 108 is stored in the form of machine-readable instructions on any of the above-mentioned storage media and may be executed by the processor 202.

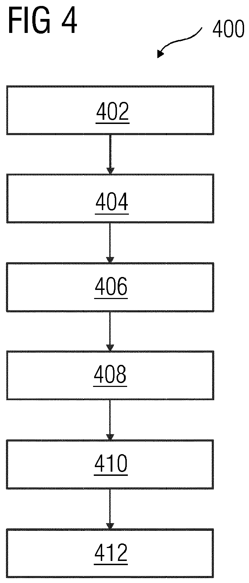

For example, when the instructions are executed by the processor 202, the interactive data manipulation module 108 causes the processor 202 to perform the functionalities above. In an embodiment, the interactive data manipulation module 108 causes the processor 202 to receive a request for scaling an original data plot from a client device via a communication network. The request comprises a set of input data points associated with the original data plot. Also, the interactive data manipulation module 108 causes the processor 202 to determine a region of interest within the original data plot based on the set of input points. The determined region of interest comprises a first set of parameters. Further, the interactive data manipulation module 108 causes the processor 202 to compute a second set of parameters associated with the determined region of interest based on the first set of parameters. Additionally, the interactive data manipulation module 108 causes the processor 202 to determine plurality of plot data values within the determined region of interest based on the second set of parameters. Moreover, the interactive data manipulation module 108 causes the processor 202 to generate a scaled data plot comprising the generated plurality of plot data values. The generated scaled data plot corresponds to the determined region of interest. In an embodiment, the scaled data plot is generated in client device specific format and then is transmitted to a client device 106 over a communication network 104. In an embodiment, the client device specific format may be a pixel value based format. Method steps performed by the processor 202 to achieve the above functionality are described in greater detail in FIG 4.

The storage unit 206 may be a non-transitory storage medium which stores data plot database 214. The data plot database 214 stores the original data plots, the scaled data plots, the first set of parameters, the second set of parameters and the set of input data points.

The input unit 210 may include input devices such as a keypad, touch-sensitive display, camera (such as a camera receiving gesture-based inputs), etc. capable of receiving one or more input signals, such as user commands to manipulate data plots. The output unit 212 may be a display unit for displaying a graphical user interface which visualizes the representation of the scaled data plot. The bus 208 acts as interconnect between the processor 202, the memory 204, the storage unit 206, the input unit 210, and the output unit 212. The server 102 may also comprise a communication interface, which may be a network interface for enabling communication between the server 102, and the client device 106 using communication protocols.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems, such as the server 102, suitable for use with the present disclosure is not being depicted or described herein. Instead, only so much of a data processing system, such as the server 102, as is unique to the present disclosure or necessary for an understanding of the present disclosure is depicted and described. The remainder of the construction and operation of the server 102 may conform to any of the various current implementation and practices known in the art.

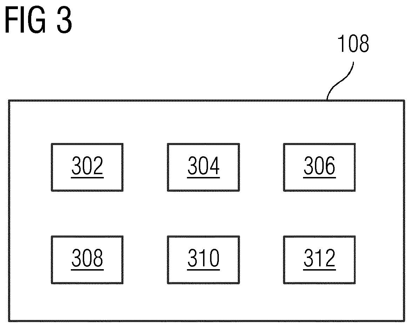

FIG 3 is a detailed view of the interactive data manipulation module 108, such as those in FIG 1, according to an embodiment of the present invention. The interactive data manipulation module 108 comprises an input data handler 302, a region of interest (ROI) determination module 304, a data processing module 306, a data scaling module 308, a data plot database 310 and an output module 312.

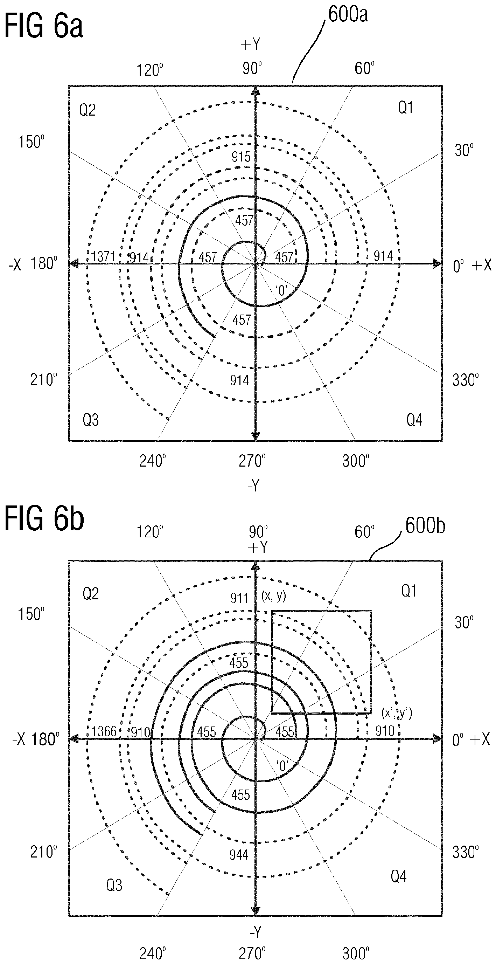

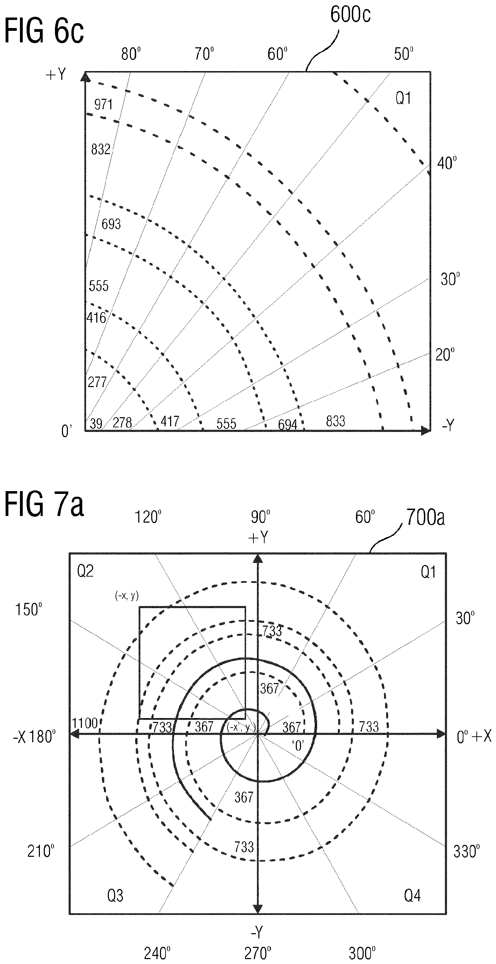

The input data handler 302 is configured for receiving a request for scaling an original data plot from a client device, such as the client device 106 via a communication network, such as the network 104. The request comprises a set of input data points associated with the original data plot. The original data plot corresponds to an original domain. The original domain comprises an origin value with respect to which the plurality of plot data values are mapped across a plurality of axis coordinates (also referred as radius 'r' values) and an original set of plot angles. An exemplary original data plot is depicted in FIG 6A and 7A. In an exemplary embodiment, the set of input data points corresponds to data coordinates of an original data plot. The data coordinates in the received request may be received in the form of data pixel values from the client device 106. In an exemplary embodiment, when a user initiates stretching an area on the original data plot, the data coordinates received from the client device 106 in the form of data pixel values may be depicted as:

```
Pm.setAttribute ('zoomedCoordinates', {x0:_left, y0:_upper, x1:_right,
y1:_lower})………equation (1)
```

According to equation (1), the set of input data points provide two axes coordinate values (x0, y0) and (x1, y1) selected by a user on the original data plot. In an exemplary implementation, since these set of input data points are in pixel format, the input data handler 302 converts the set of input data points from pixel format to Cartesian coordinate format based on an original domain as below:

```
Private CartesianPoint convertToCartesian (Point, point)

{

Int x= (int) (point.x*(polarDomain*2)/ (dimension.getWidth()-1));

Int y= (int) (point.y* (polardomain*2)/ (dimension.getWidth()-1));

Return new cartesianPoint (x,y);

}……………………….equation (2)
```

As seen from above equation (2), the set of input data points received from the client device 106 are converted from the pixel format to the Cartesian format to obtain the converted set of input data points (x, y) and (x',y') on the original data plot. The conversion of the set of input data points into Cartesian format depends on the original domain of the original data plot. In an embodiment, if the original domain is a polar domain, then the original domain corresponds to data range of polar plot.

In an exemplary embodiment, consider a user has selected a portion on the original data plot which he wants to scale such that the portion selected corresponds to a square shape. In such scenarios, the converted set of input data points (x, y) and (x',y') corresponds to the upper left vertex of the portion selected and the lower right vertex of the portion selected. These converted set of input data points (x, y) and (x',y') are then fed to the region of interest (ROI) determination module 304 as an input.

The region of interest (ROI) determination module 304 is configured for determining a region of interest within the original data plot based on the set of input points, specifically the converted set of input data points (x, y) and (x',y'). The determined region of interest comprises a first set of parameters. The first set of parameters comprises the subset of plot angles and the sub set of plurality of axis coordinates. The first set of parameters is computed as described below.

In determining the region of interest, the ROI determination module 304 is further configured for determining a subset of plot angles among the original set of plot angles based on the set of input data points. In an exemplary implementation, each subset of plot angles among the original set of plot angles are determined as below:

```
float xDis=(float) (point.x -(convertToCartesian (origin)).x);

float yDis = (float) (convertToCartesian (origin).y - point.y);

float angle = (float) Math.toDegrees (Math.atan2 (yDis, xDis));

if (angle < 0)

angle = 360.0f- Math.abs (angle); // evaluating angles in third and
fourth quadrants,

zoomarea.add(angle);..........................................equation (3)
```

According to equation (3), a subset of plot angles corresponding to the portion selected by the user on the original data plot is determined. This subset of plot angles corresponds to all angles covered under the portion selected.

Further, ROI determination module 304 is configured for determining a subset of axis coordinates plotted on the original data plot based on the set of input data points. In an embodiment, the subset of axis coordinates plotted on the original data plot corresponds to the selected portion of the original data plot. The subset of axis coordinates may correspond to radius 'r' value. In an embodiment, the radius 'r' value may also be referred as amplitude value. Moreover, the subset of axis coordinates are determined based on the subset of plot angles and the converted set of input data points derived above. For each of the subset of plot angles, a corresponding subset of axis coordinates are determined. For example, if the subsets of plot angles are in the range of 20°-80° in the first quadrant of the original data plot, the subset of axis coordinates are determined to be in the range of 277-971 for ordinate and 39-833 for the abscissa. In an embodiment, the subset of axis coordinates are determined as below :

```
    private        void      calculateValuesOnClientDomain(CartesianPoint
cartesianPoint, double[] domainValues, int index)

    {

        domainValues[index]=cartesianPoint.x-
convertToCartesian(origin)).x;

        domainValues[index + 2] = (convertToCartesian(origin)).y -
cartesianPoint.y;

        }........................equation (4)
```

The above equation (4) is used for determining major and minor units of both axes (x & y) that is to be sent to the client device 106 for redrawing axes corresponding to the determined subset of axis coordinates or major and minor units. Each time a user draws an area of interest, the subset of axis coordinates are subsequently calculated each time for the drawn area of interest.

In an embodiment, the determined region of interest corresponds to the first set of parameters, i.e., the subset of plot angles and the subset of axis coordinates. In other words, the region of interest is determined by first determining the first set of parameters. Once the first set of parameters are determined, the region of interest corresponding to the first set of parameters is then determined. Further, the determined region of interest corresponds to the portion selected by the user to which the original data plot is to be scaled. The ROI determination module 304 feeds the first set of parameters and the determined region of interest to the data processing module 306.

The data processing module 306 is configured for computing a second set of parameters associated with the determined region of interest based on the first set of parameters. The second set of data parameters comprises modified domain value, scale factor and the modified origin value. The second set of parameters is computed as described below.

In an embodiment, the data processing module 306 is configured for computing a modified domain value corresponding to the determined region of interest based on the first set of parameters. In an exemplary implementation, the modified domain value is calculated by:

```
int diff = (right – left) >= (bottom – top) ? (right – left) :
(bottom – top);

    float   updatedDomain   =   (float)   (((polarDomain   *   2)   /
dimension.getWidth()) * Math.abs(diff) / 2);.................. Equation (5)
```

As seen from equation (5), the modified domain value (also referred as 'updated domain value') is obtained using the first set of parameters. In an embodiment, the modified domain or the updated domain corresponds to the determined region of interest, where the modified domain is mapped/superimposed on the determined region of interest using the first set of parameters, i.e., the subset of axis coordinates (also referred as radius r' values) and the subset of plot angles.

In an embodiment, the data processing module 306 is configured for computing a scale factor for the determined region of interest based on the computed modified domain value. The scale factor indicates plot dimensions with enlarged area of the determined region of interest. In other words, the region of interest may be superimposed on the original data plot. That means, the original origin value and all original plot data values is to be shifted in such a way so that an enlarged area specific to the region of interest is outputted. In order to achieve this, a scale factor is computed which shifts these values subsequently helping in recalculating the modified origin value in the region of interest. This scale factor is calculated based on the original domain and a modified or updated domain and as the modified domain corresponding to determined region of interest ROI is to be superimposed onto the original domain.

In an exemplary implementation, the scale factor is computed as below:

```
Scale factor = original domain /updated domain............................... equation (6)
```

In the equation (6) above, the original domain corresponds to the domain of the original data plot and the updated domain is obtained as described above. Hence, scale factor is division of the larger domain by smaller domain as shown in equation (6).

In an embodiment, the data processing module 306 is further configured for determining a modified origin value for the determined region of interest based on the computed scale factor. In an exemplary embodiment, consider that the original origin value as (0,0) in terms of Cartesian coordinates (or dimension.width/2, dimension.height/2 in terms of pixel coordinates) plotted on the original data plot. The absolute position of the modified origin is to be determined to ensure there is no loss of information. The absolute position of the modified origin is determined by first identifying nearest axis coordinate value among the subset of axis coordinate values from the original origin value. For example, if the subset of axis coordinates are such that the abscissa values range from 39-833 and the ordinate values range from 277-971, the nearest abscissa and ordinate value from the original origin value, say (0,0) is identified based on the scale factor. In this case, the nearest abscissa and ordinate value from the original origin value would be for example (39, 277). Hence, the modified origin value may correspond to the value (39, 277) in this exemplary embodiment. In an exemplary implementation, the process of determining the modified origin value for the determined region of interest based on the computed scale factor is as follows:

```
Private int calculateAbscissa (point nearestPoint)

{

Int xpoint =0;

If (nearestpoint.x <0)

Xpoint = (int) Math.round (dimension.getwidth ()+ ((origin.x +
(nearestPoint.x))) *scaleFactor);

If (nearestpoint.x>0)

xPoint= (int) Math.round ((origin.x – (nearestPoint.x) *scaleFactor);

return xpoint;

}....................................... equation (7)

Private int calculateOrdinate (point nearestPoint)

{

Int ypoint =0;

If (nearestpoint.y <0)

Ypoint = (int) Math.round (dimension.getwidth()+ (origin.y –
(nearestPoint.y) *scaleFactor);

If (nearestpoint.y>0)

yPoint= (int) Math.round ((origin.y + (nearestPoint.y) *scaleFactor);

return ypoint;

}....................................equation (8)
```

According to equations (7) and (8), the modified origin value, for example O'(x, y), is determined for the region of interest based on the computed scaled factor in the manner described above. Thus, the second set of parameters comprising the modified domain value, the scale factor and the modified origin value associated with the determined region of interest is computed. The second set of parameters is then fed as an input to the data scaling module 308.

The data scaling module 308 is configured for determining plurality of plot data values within the determined region of interest based on the second set of parameters. The plurality of plot data values are in the form of FloatVectorRt. The FloatVectorRt is a subtype of ValueRt object consisting of angle (theta) and radius 'r' (amplitude) for plotting the data values onto a graphical user interface (UI). In order to achieve this, first each original plot data values in an original pixel format are replotted on a Cartesian data plot. This is done by first converting the original plot angle and original plurality of axis coordinates into Cartesian form. The original plot angle and original plurality of axis coordinates are converted into Cartesian form to obtain the converted original plot data value using the following:

```
private CartesianPoint convertToCartesian(ValueRt vector)

{

    final int piAngle = 180;

        double angleInRadians = vector.getFloatVector()[0] * Math.PI /
piAngle;

        double      x      =      Math.cos(angleInRadians)      *
vector.getFloatVector()[1];

        double      y      =      Math.sin(angleInRadians)      *
vector.getFloatVector()[1];

        return new CartesianPoint(x, y);

}................................ equation (9)
```

From equation (9), original plot data values in Cartesian form are obtained. Then, the data scaling module 308 determines the plurality of plot data values among the original plot data values falling within the determined region of interest based on the second set of parameters. In an exemplary implementation, the plurality of plot data values within the determined region of interest is determined using the formula below:

```
Private  Boolean  isPolarPointWithinDrawingArea  (Point  point,  int
pointIndex, int signalIndex)

{

Boolean isPointwithinarea = point.x >=0 && point.x <dimension.getWidth
() && point.y >= 0 && point.y <dimension.getHeight ();

If (isPointWithinArea)

drawPointToValueIndexMatrix      [point.y][point.x][signalIndex]      =
poinIndex;

return isPointWithinArea;

}......................................... equation (10)
```

Using the above equation (10), the plurality of plot data values within the determined region of interest is determined. For example, if the determined region of interest corresponds to ordinate values ranging from 277-971 and abscissa values ranging from 39-833 with the subset of plot angles from 20°-80°, all the plot data values corresponding to the above mentioned ordinate and abscissa values with the above mentioned plot angles are determined. In an exemplary embodiment, out of the overall ~200,000 plot data values plotted on the original data plot, ~30,000 plot data values lying within the determined region of interest is determined. The process of determining plot data values is carried out such that there is no loss of information of any single plot value lying within the determined region of interest and the all the plot values within the determined region of interest is identified accurately. This is achieved using the computation method described above.

Further, the data scaling module 308 is configured for generating a scaled data plot comprising the generated plurality of plot data values. The generated scaled data plot corresponds to the determined region of interest. The generated scaled data plot indicates the scaled version of the original data plot and the remaining area of the original data plot is clipped off. In an exemplary implementation, the scaled data plot is generated by plotting the determined plot data values in the determined region of interest using the updated domain, the scale factor, and the modified origin value. In an embodiment, the scaled data plot may be a zoomed version of the original data plot and the scale factor may be a zoom factor. In an embodiment, the scaled data plot is generated in client device specific format and then is transmitted to a client device 106 over a communication network 104. In an embodiment, the client device specific format may be a pixel value based format. This generated scaled data plot is then fed to the output module 312.

The data plot database 310 is configured for storing the set of input data points, first set of parameters, the second set of data parameters, the original data plot with the origin value, original set of plot angles and the original set of axis coordinates. Further, the data plot database 310 is also configured for storing the scaled data plot.

The output module 312 is configured for transmitting the scaled data plot to the client device 106 over the network 104 and displaying the scaled data plot on a graphical user interface. Since, the interactive data processing system 100 enables a plant operator to perform various actions, such as scaling of the data plots at real-time, the flexibility of the data plots are increased and also the data accuracy is increased to visualize more accurate data at real-time using the embodiments described herein. Moreover, the method and system described herein allows enhanced flexibility in decreasing the response time of, for example less than a second to scale up to 200,000 data values on the graphical user interface. Also, with the embodiments described herein the data plots are made more interactive allowing the plant operators to perform a number of customizations on the data plot without any loss of information.

FIG 4 is a flowchart 400 illustrating an exemplary method of scaling data plots in a distributed control system, according to an embodiment of the present invention. At step 402, a request for scaling an original data plot is received from a client device, such as the client device 106 via a communication network, such as the network 104. The request comprises a set of input data points associated with the original data plot. The original data plot corresponds to an original domain and the original data plot corresponds to an original domain and the original data plot comprises an original origin value, the plurality of plot data values mapped to a plurality of axis coordinates and an original set of plot angles.

At step 404, a region of interest within the original data plot is determined based on the set of input points. The determined region of interest comprises a first set of parameters. The first set of parameters comprises the determined subset of plot angles and the subset of axis coordinates plotted on the original data plot. At step 406, a second set of parameters associated with the determined region of interest is computed based on the first set of parameters. The second set of data parameters comprises the computed modified domain value, the computed scale factor and the modified origin value. At step 408, plurality of plot data values within the determined region of interest are determined based on the second set of parameters. At step 410, a scaled data plot comprising the determined plurality of plot data values is generated. The generated scaled data plot corresponds to the determined region of interest. In an embodiment, the scaled data plot is generated in client device specific format and then is transmitted to a client device 106 over a communication network 104. In an embodiment, the client device specific format may be a pixel value based format. At step 412, the scaled data plot is displayed on a graphical user interface, such as output unit 212.

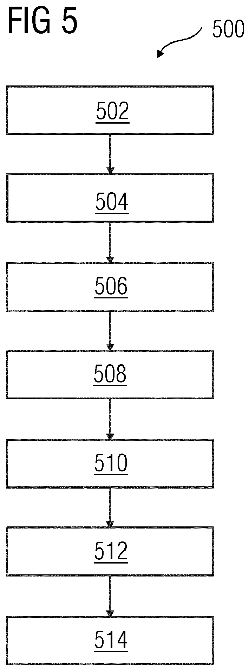

FIG 5 is a process flowchart illustrating an exemplary method of data manipulation of data plots in a distributed control system, according to an embodiment of the present invention. At step 502, a request for scaling an original data plot is received from a client device, such as the client device 106 via a communication network, such as the network 104. The request comprises a set of input data points associated with the original data plot. The original data plot corresponds to an original domain and the original data plot comprises an original origin value, the plurality of plot data values mapped to a plurality of axis coordinates and an original set of plot angles.

At step 504, a subset of plot angles among the original set of plot angles is determined based on the set of input data points. At step 506, a subset of axis coordinates plotted on the original data plot is determined based on the set of input data points to determine a region of interest within the original data plot. The determined subset of plot angles and the subset of axis coordinates correspond to the first set of parameters. At step 508, a modified domain value corresponding to the determined region of interest is computed based on the first set of parameters. At step 510, a scale factor for the determined region of interest is computed based on the modified domain value. At step 512, a modified origin value for the determined region of interest is determined based on the computed scale factor. The computed modified domain value, the computed scale factor and the modified origin value correspond to the computed second set of parameters. At step 514, plurality of plot data values within the determined region of interest is determined based on the computed second set of parameters. Further, a scaled data plot comprising the determined plot data values is generated. The scaled data plot corresponds to the determined region of interest. In an embodiment, the scaled data plot is generated in client device specific format and then is transmitted to a client device 106 over a communication network 104. In an embodiment, the client device specific format may be a pixel value based format.

FIG 6A-6C are snapshots of data plots at various stages of data manipulation method, according to an exemplary embodiment of the present invention. In FIG 6A, an original data plot is depicted. For example, the original data plot may be a polar plot. In an embodiment, a polar plot is drawn in a circular shape with a radius 'r', domain 'd' known as polar domain and origin (0,0). The data values plotted on the polar plot are measured in terms of FloatVectorRts. The data values are plotted across radius 'r' and angle theta in the polar plot. The original data plot comprises an original domain, where the original domain comprises plurality of plot data values mapped across plurality of plot angles and plurality of axis coordinates (also referred as radius 'r'). The original data plot comprises four quadrants, for example, Q1, Q2, Q3 and Q4. The original data plot depicts a normal Cartesian coordinate system with plurality of coordinate values (abscissa, ordinate) and plurality of plot angles. The original data plot comprises an original origin value O (0,0). FIG 6B depicts an exemplary scenario where the user of a client device, such as client device 106 wishes to zoom the original data plot by selecting a portion on the quadrant Q1 of the original data plot. This selection by the user initiates a request from the client device, say client device 106 to the server 102. The request comprises the set of input data points. In this case, the set of input data points may correspond to two pixel values, for example (x0, y0) and (x1, y1) corresponding to the selection. When the request is received at the server 102, the server 102 determines the input data points in the Cartesian format as for example, (x,y) and (x',y') as shown. It can be seen from above that the user selected portion consists of plurality of plot data values. However, the request from the client device 106 comprises the set of input data points corresponding to the user selected portion, which is the two coordinate values. Since the data transferred between the client device 106 and the server 102 comprises only the set of input data points and not the entire data values or coordinates of the original data plot, the response time of the server 102 has been decreased significantly as less amount of data is being shared between the client device 106 and the server 102.

The server 102 then processes the request received by the client device 106 in the manner described above to generate a scaled data plot. FIG 6C depicts the scaled data plot, which is for example the zoomed version of the original data plot. It can be seen from the FIG 6C that the rest of the area of the original data plots are clipped of and the zoomed area of the original data plot is generated and displayed. The scaled data plot has a modified origin value O' and the plurality of plot data values mapped across subset of plot angles and the subset of coordinate axis. The scaled data plot comprising the determined plot data values is then transmitted to the client device 106 by the server 102. Hence, the data load on the client device 106 and the server 102 has been significantly reduced as only relevant data is exchanged between the client device 106 and the server 102.

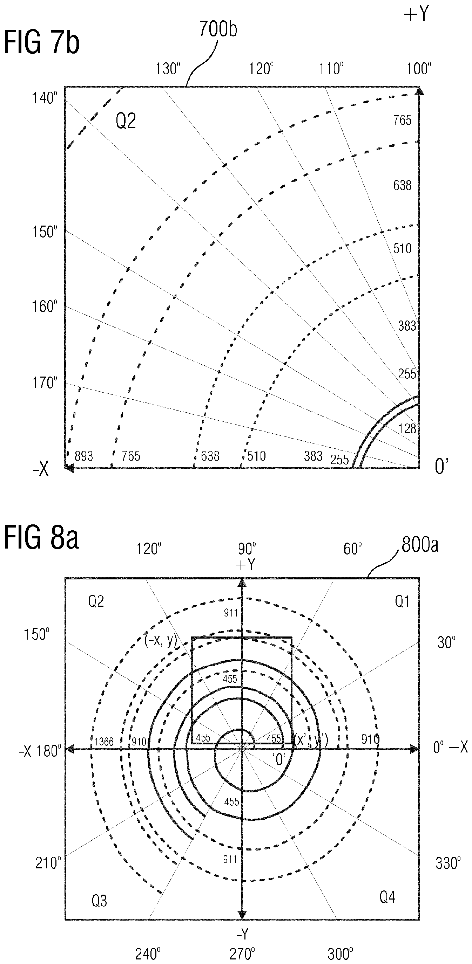

Similarly FIGs 7A-7B depict snapshots of data plots at various stages of data manipulation method when the user selects a portion on the quadrant Q2 of the original data plot, according to another exemplary embodiment of the present invention. Accordingly, FIG 7A depicts the process of initiating a request from the client device 106 to the server 102 when the user selects a portion on the quadrant Q2 of the original data plot. This request is then processed by the server 102 in the manner described above to obtain the scaled data plot which is depicted in FIG 7B. Accordingly, FIG 7B depicts the scaled, (for example zoomed) version of the original data plot with modified origin value O' and the plurality of plot data values mapped across subset of plot angles and the subset of coordinate axis.

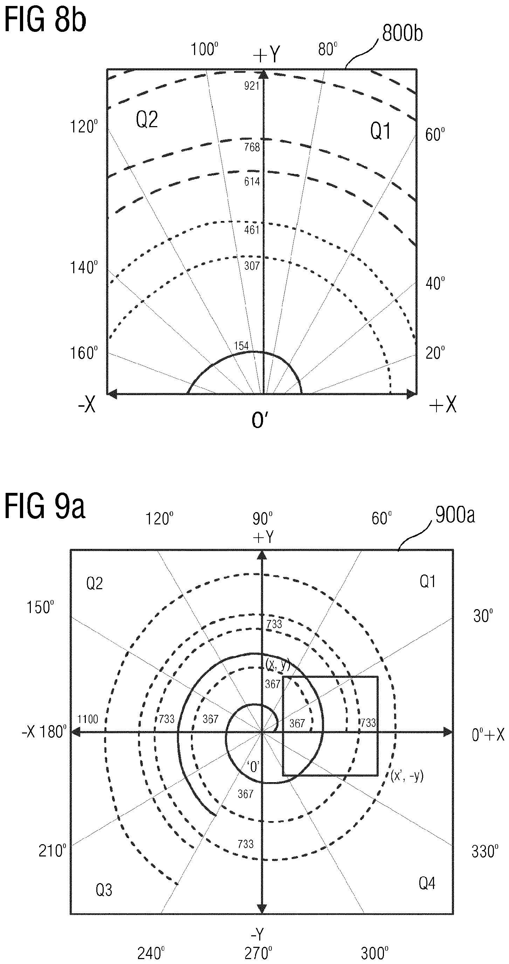

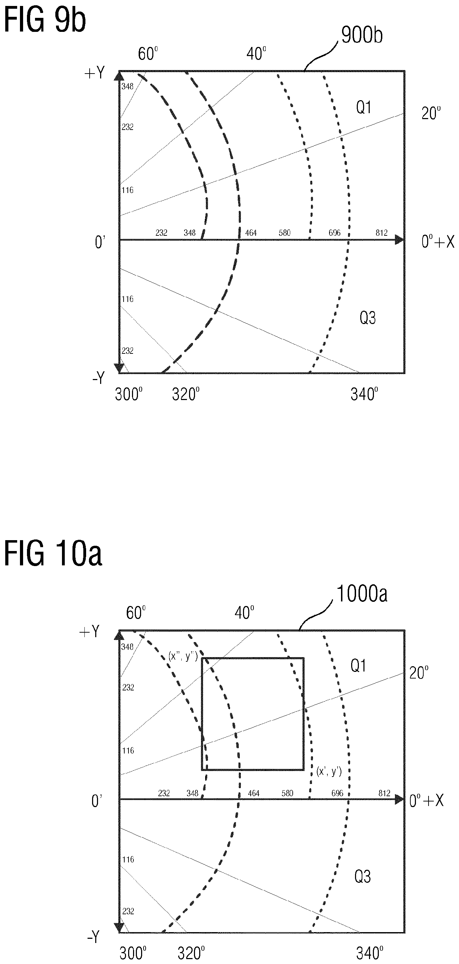

FIG 8A-8B are snapshots of data plots at various stages of data manipulation method, according to yet another exemplary embodiment of the present invention. FIG 8A depicts a scenario where the user of the client device 106 has selected a portion in between two quadrants, Q1 and Q2 on the original data plot. FIG 8B depicts the scaled data plot corresponding to the portion selected by the user in between the two quadrants, Q1 and Q2 on the original data plot. The scaled data plot comprises a modified origin value O' and the plurality of plot data values mapped across subset of plot angles and the subset of coordinate axis. The scaled data plot is then transmitted to the client device 106 by the server 102. Similarly, FIG 9A-B are snapshots of data plots at various stages of data manipulation method, according to yet another exemplary embodiment of the present invention. FIG 9A depicts a scenario where the user of the client device 106 has selected a portion in between two quadrants, Q1 and Q4 on the original data plot. FIG 9B depicts the scaled data plot corresponding to the portion selected by the user in between the two quadrants, Q1 and Q4 on the original data plot. The scaled data plot comprises a modified origin value O' and the plurality of plot data values mapped across subset of plot angles and the subset of coordinate axis. The scaled data plot is then transmitted to the client device 106 by the server 102.

FIG 10A-B are snapshots of data plots at various stages of data manipulation method, according to yet another exemplary embodiment of the present invention. FIG 10A depicts the generated scaled data plot.

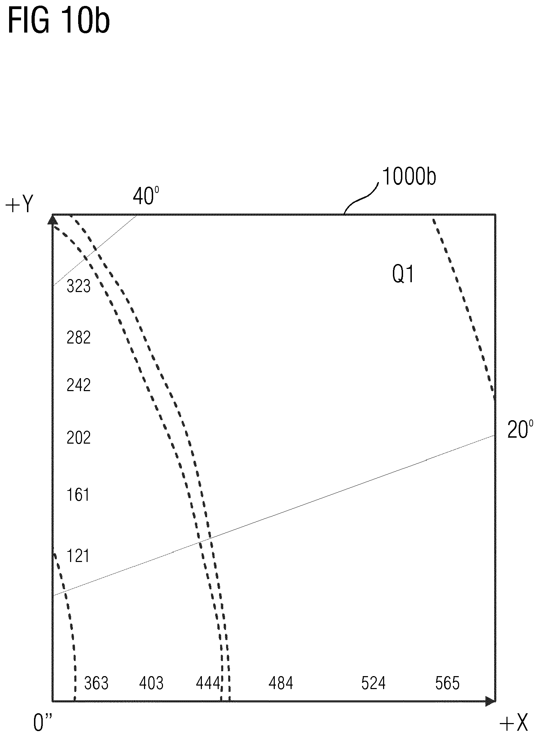

In an embodiment, the generated scaled data plot is the output of any of the above embodiments described. The generated scaled data plot comprises a first modified origin value O' and a first set of plurality of plot data values mapped across first subset of plot angles and the first subset of coordinate axis values. FIG 10A depicts a second level scaling of the generated scaled data plot. For example, if the user of the client device 106 wishes to further zoom the generated scaled data plot, a new request is triggered from the client device 106 to the server 102. The server 102 processes the new request in the same manner as that of the initial request from the client device 106 to generate a further scaled data plot or the second level scaled data plot. In general FIG 10A depicts subsequent scaling of the scaled data plot. FIG 10B depicts the generated further scaled data plot or the second level scaled data plot. In this scenario, the scaling is performed twice on the original data plot to obtain the second level scaled data plot. The second level scaled data plot comprises a modified origin value O" and second set of plurality of plot data values mapped across second subset of plot angles and second subset of coordinate axis.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

**Claims**

1. An interactive method for scaling data plots in a distributed control system (100), the method comprising:

   receiving, by a processor (202), a request for scaling an original data plot from a client device (102)via a communication network (104), wherein the request comprises a set of input data points associated with the original data plot;
   determining, by the processor (202), a region of interest within the original data plot based on the set of input points, wherein the determined region of interest comprises a first set of parameters;
   computing, by the processor (202), a second set of parameters associated with the determined region of interest based on the first set of parameters;
   determining, by the processor (202), plurality of plot data values within the determined region of interest based on the second set of parameters; and
   generating, by the processor (202), a scaled data plot comprising the generated plurality of plot data values, wherein the generated scaled data plot corresponds to the determined region of interest.

2. The method according to claim 1, further comprising:

   displaying the scaled data plot on a graphical user interface.

3. The method according to claim 1, wherein the original data plot corresponds to an original domain and wherein the original data plot comprises an original origin value, the plurality of plot data values mapped to a plurality of axis coordinates and an original set of plot angles.

4. The method according to claim 1 or 3, wherein determining the region of interest within the original data plot based on the set of input points comprises:

   determining a subset of plot angles among the original set of plot angles based on the set of input data points; and
   determining a subset of axis coordinates plotted on the original data plot based on the set of input data points.

5. The method according to claim 1 to 4, wherein the first set of parameters comprises the determined subset of plot angles and the subset of axis coordinates plotted on the original data plot.

6. The method according to claim 1 to 5, wherein computing the second set of parameters associated with the determined region of interest based on the first set of parameters comprises:

computing a modified domain value corresponding to the determined region of interest based on the first set of parameters;

computing a scale factor for the determined region of interest based on the computed modified domain value; and

determining a modified origin value for the determined region of interest based on the computed scale factor.

7. The method according to claim 1 to 6, wherein the second set of data parameters comprises the computed modified domain value, the computed scale factor and the modified origin value.

8. An apparatus (102) for scaling data plots in a distributed control system, comprising:

a processor (202); and

a memory (204) coupled to the processor (202), wherein the memory (204) comprises an interactive data manipulation module (108) stored in the form of machine-readable instructions executable by the processor (202), wherein the interactive data manipulation module (108)is capable of:

receiving a request for scaling an original data plot from a client device (106) via a communication network (104), wherein the request comprises a set of input data points associated with the original data plot;

determining a region of interest within the original data plot based on the set of input points, wherein the determined region of interest comprises a first set of parameters;

computing a second set of parameters associated with the determined region of interest based on the first set of parameters;

determining plurality of plot data values within the determined region of interest based on the second set of parameters; and

generating a scaled data plot comprising the generated plurality of plot data values, wherein the generated scaled data plot corresponds to the determined region of interest.

9. The apparatus (102) according to claim 8,wherein the interactive data manipulation module (108)is capable of:

displaying the scaled data plot on a graphical user interface.

10. The apparatus (102) according to claim 8, wherein the original data plot corresponds to an original domain and wherein the original data plot comprises an original origin value, the plurality of plot data values mapped to a plurality of axis coordinates and an original set of plot angles.

11. The apparatus (102) according to claim 8 or 10, wherein in determining the region of interest within the original data plot based on the set of input points, the interactive data manipulation module (108) is capable of:

determining a subset of plot angles among the original set of plot angles based on the set of input data points; and

determining a subset of axis coordinates plotted on the original data plot based on the set of input data points.

12. The apparatus (102) according to claim 8 to 11, wherein the first set of parameters comprises the determined subset of plot angles and the subset of axis coordinates plotted on the original data plot.

13. The apparatus (102) according to claim 8 to 12, wherein in computing the second set of parameters associated with the determined region of interest based on the first set of parameters, the interactive data manipulation module (108) is capable of:

computing a modified domain value corresponding to the determined region of interest based on the first set of parameters;

computing a scale factor for the determined region of interest based on the computed modified domain value; and

determining a modified origin value for the determined region of interest based on the computed scale factor.

14. The apparatus (102) according to claim 8 to 13, wherein the second set of data parameters comprises the computed modified domain value, the computed scale factor and the modified origin value.

15. A distributed control system (100) comprising:

a server (102) configured for performing the method steps according to claims 1-7; and

one or more client devices (106) is configured for outputting the scaled data plot on a graphical user interface, wherein the one or more client devices (106) are communicatively coupled to the server (102)via a network (104).

# FIG 1

# FIG 2

FIG 3

108

| | | |
|---|---|---|
| 302 | 304 | 306 |
| 308 | 310 | 312 |

# FIG 4

400

```
┌─────────────┐
│     402     │
└─────────────┘
       │
       ▼
┌─────────────┐
│     404     │
└─────────────┘
       │
       ▼
┌─────────────┐
│     406     │
└─────────────┘
       │
       ▼
┌─────────────┐
│     408     │
└─────────────┘
       │
       ▼
┌─────────────┐
│     410     │
└─────────────┘
       │
       ▼
┌─────────────┐
│     412     │
└─────────────┘
```

# FIG 5

500

502

504

506

508

510

512

514

FIG 6a

FIG 6b

FIG 6c

600c

+Y

80°    70°    60°    50°

Q1

971

832

40°

693

30°

555

416

20°

277

0'   39  278   417   555   694   833        -Y

FIG 7a

120°      90°      60°   700a
         +Y

Q2                              Q1

(-x, y)

150°                            30°

733

367

-X 180°  1100  733  367 (-x', y) 367  733   0° +X
                        '0'

367

733

210°                           330°

Q3                              Q4

-Y
240°    270°    300°

FIG 7b

FIG 8a

FIG 8b

FIG 9a

# FIG 9b

# FIG 10a

# FIG 10b

Europäisches Patentamt

European Patent Office

Office européen des brevets

# EUROPEAN SEARCH REPORT

Application Number

EP 17 19 9643

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/187321 A1 (GEN ELECTRIC [US]) 10 December 2015 (2015-12-10) * paragraph [0025]; figure 1 * * paragraph [0029] - paragraph [0039]; figures 1, 3A-B, 4A-B * | 1-15 | INV. G06T3/40 G06T11/20 |
| X | US 5 226 118 A (BAKER MICHAEL K [US] ET AL) 6 July 1993 (1993-07-06) * column 4, line 26 - line 54; figure 1 * * column 5, line 65 - column 6, line 12; figure 4 * * column 14, line 12 - line 46; figures 5, 21, 22 * | 1-15 | |
| A | EP 2 866 104 A1 (BOSCH GMBH ROBERT [DE]) 29 April 2015 (2015-04-29) * paragraph [0016] - paragraph [0018] * | 1-15 | |
| A | "Matlab 2009b Help; bode, bodeoptions, bodeplot, pan, panning - shifting your view of the graph, zoom ED - ANONYMOUS", 4 September 2009 (2009-09-04), MATLAB 2009B HELP, THE MATHWORKS, PAGE(S) 1 - 23, XP002722065, * the whole document * | 1-15 | |

TECHNICAL FIELDS SEARCHED (IPC)

G06T
G05B
G06F

The present search report has been drawn up for all claims

| Place of search | Date of completion of the search | Examiner |
|---|---|---|
| Munich | 5 April 2018 | Bernard, Eddy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 19 9643

This annex lists the patent family members relating to the patent documents cited in  the above-mentioned European search report.
The members are as contained in the European Patent Office EDP file on
The European Patent Office is in no way liable for these particulars which are merely given for the purpose of information.

05-04-2018

| Patent document cited in search report | | Publication date | Patent family member(s) | | Publication date |
|---|---|---|---|---|---|
| WO 2015187321 | A1 | 10-12-2015 | EP 3152645 A1 <br> US 2015356705 A1 <br> WO 2015187321 A1 | | 12-04-2017 <br> 10-12-2015 <br> 10-12-2015 |
| US 5226118 | A | 06-07-1993 | NONE | | |
| EP 2866104 | A1 | 29-04-2015 | NONE | | |

EPO FORM P0459

For more details about this annex : see Official Journal of the European Patent Office, No. 12/82